# EUROPEAN PATENT APPLICATION

(11) **EP 4 002 571 A1**
(43) Date of publication of application: **25.05.2022**
(21) Application number: 21196727.8
(22) Date of filing: 14.09.2021
(51) Int. Cl.: H01M 50/308, H01M 50/333

(54) **A SAFETY VALVE FOR A BATTERY OR AN ACCUMULATOR FOR ELECTRIC OR HYBRID VEHICLES**

(30) Priority: 11.11.2020 SI 202000206
(71) Applicant: Siliko d.o.o., 1360 Vrhnika (SI)
(72) Inventor: Kostanjevec, Andrej, 1294 Visnja Gora (SI); Novsak, Anze, 1000 Ljubljana (SI)
(74) Representative: Patentni Biro AF d.o.o.

(57) **Abstract**

The present invention belongs to the field of batteries, in particular to the field of constructional details of non-active parts such as housings, lids or deaeration systems for discharging gases from the interior of batteries. The invention relates to a safety pressure valve for installation on a housing of a battery, which may be used in electric or hybrid vehicles, vessels or aircrafts. The valve according to the invention comprises at least the following components:
- a housing,
- a valve element removably connected to the housing, and comprises a valve frame and a lid, between which a liquid impermeable and air permeable membrane is installed,
- a seal installed between the housing and the valve element, and
- a spring element, which ensures a force between the housing and the valve element in normal operation, and which enables ejection of the valve element in case of emergency degassing.

The spring element is installed between the housing and the valve frame and is shaped as a leaf spring, which pushes onto the valve housing on a surface facing towards the battery housing interior, and on the valve element on a surface facing towards the battery housing exterior. In case of emergency degassing the spring element loses a contact with the valve element and/or the housing.

## Description

### Field of the invention

The present invention belongs to the field of batteries, in particular to the field of constructional details of non-active parts such as housings, lids or deaeration systems for discharging gases from the interior of batteries. The invention relates to a safety pressure valve for installation on a housing of Li-ion or any other battery, which may be used in electric or hybrid vehicles, vessels or aircrafts.

### Background of the invention and the technical problem

The technology of transportation means is striving to use electricity as the main energy source for powering vehicles, wherein energy is stored in a group of batteries, which are often installed inside a common housing that separates batteries from other vehicle parts and from the environment. The mentioned housing protects batteries from environmental effects and in case of malfunction or damage also protects the exterior (environment) against potentially dangerous chemical agents. In addition to batteries and other necessary components, limited space is available in the housing, said limited space usually being filled with air. The latter can be heated or cooled with regards to the elements, which results in increase or decrease of its volume. Consequently, a pressure difference may be created in the housing, possibly damaging it. In order to prevent such events, housings are provided with a suitable valve or a degassing unit. In case of failure of one or more batteries the pressure inside the housing significantly increases, hence discharging gases into the environment is necessary. Several different valves allow such function, but show some disadvantages. For example, in order to trigger degassing some solutions require puncturing of a membrane, the whole disc or a foil, or use polymeric materials, which are not desired due to possible problems connected with temperature dependence of mechanical properties and ageing. Some known solutions should be dimensionally adjusted, due to their limited surfaces for degassing, which would lead to larger, thicker or more expensive valves.

The technical problem, which is solved by the present invention, is construction of a safety valve that will ensure simple and reliable discharge of gasses in urgent cases, while the valve will ensure reliable sealing in conditions at normal operation.

### State of the art

Patent DE102012022346 describes a housing for a battery or an accumulator of an electric or a hybrid vehicle, wherein the housing has an interior and an opening, a membrane and a membrane carrier, wherein the membrane carrier represents the central part of the housing, which has a carrier body with an interior and exterior as well as an opening between the interior and exterior, which is covered with the membrane and a membrane covering. The membrane is on the other side protected with a protective element; wherein multiple grid openings are arranged between support grid nets in the form of gas passage apertures for degassing of the housing interior. All said parts are water-tightly connected with each other, whereas only air can pass due said parts to air discharge or pressure regulation.

Patent application WO2020164902 relates to a pressure-relief valve for reducing pressure arising in a cell-like cavity, such as a battery cell, comprising a cover, which supports a seal for sealing a housing opening up to a predefined cell pressure and a holding device in order to fix the cover to the housing aperture. The holding device has a spring clamp, which is symmetrically shaped with six evenly distributed spring tongues extending radially from the central part. The spring clamp is pressed onto the housing aperture and during installation of the valve into the battery cell the spring can pass the edge of the aperture in the direction of assembling and is stuck in place in the radial direction. The present invention differs from this solution in the shape and the position of the spring. A complete opening of the housing aperture by ejecting the valve core, which is one of the key functions of the present invention, is not enabled with the solution according to WO2020164902.

Document JP2012195217 describes a safety valve for a battery, which has a seal for contacting an opening of housing of the battery, a central plate in contact with the seal and a leaf spring for pushing the seal against the opening. The valve has some additional parts and side parts, which affect the state of the central plate. When pressure acting on the seal is equal to or smaller than a predetermined pressure, the seal closes the opening. When the pressure acting on the seal exceeds the predetermined pressure, the first part of the side plate is rotated with respect to the first supporting part and the second side plate is rotated with regards to the second supporting part, which causes a movement of the centre plate away from the opening, causing displacement of the in the direction away from the opening. The description in JP2012195217 does not mention a function of permanent open status of the housing opening, which represents a major difference with regards to the present invention. Also, the valve described in patent JP2012195218 uses a leaf spring, which pushes onto the seal, when the pressure is lower than the pre-set value. Once the pressure is increased, the spring is separated from the seal and the opening of degassing is opened. Similarly, the concept described in JP2012195218 does not allow full open status of the housing opening, as the welded spring element, which covers the housing opening from the exterior, only deforms, but stays in the same place.

Document CN209434271 describes a valve having a different construction as the present invention, while it uses a compression spring for ensuring the push force of the valve onto the battery housing, which significantly differs from the present invention.

### Description of the solution to the technical problem

The present invention solves the disadvantages of known solutions, wherein the main problem of triggering emergency degassing is solved with a specially shaped and specifically fastened spring element. This specific fastening manner allows removal of the central part of the valve upon triggering of emergency degassing, and at the same time also allows placement of an air-permeable waterproof membrane onto the removable central part of the valve, which is a highly valuable additional function. More precisely, by increasing deformation, the spring element slides from one of the supporting elements, thus unlocking itself from the support and releasing the central part of the valve for ejection, while at the same time the position of the spring element does not hinder membrane function, because it is in its basic position attached to the frame of the central part of the valve and on the valve housing at points, which allows passage of gas through the membrane. The central part of the valve is in the continuation of the description termed as valve element, which may comprise several parts. The spring and similar elastic elements are in known solutions used for compression of seals onto the opening of the battery housing during normal operation. In addition, all solutions with a spring are permanently connected and the valve or its area for degassing is not fully opened, while the valve is returned to its basic position once degassing and pressure equalization is completed. An exception is patent CN201681989U, where a coil spring is installed between the valve element and a detonation lid of the housing, which is an additional spring element between the housing and the valve element, while its position is between the valve element and the exterior (i.e., outside). Because the detonation lid seals the space between the valve element and the environment, it prevents installation of an air permeable membrane on the valve element. The spring on the outside also means that dirt could prevent valve function. Therefore, this known solution differs from the present invention.

The spring element in the present invention as an individual component ensures:
- suitable force for pressing the seal onto the opening, and
- triggers ejection of the valve element, which then due to pressure inside the housing falls out from the opening in the housing.

The reason for removal of the central part of the valve is the need for decreasing pressure inside the battery housing once emergency degassing has already been initiated. In addition to gas, hard particles are also removed from the housing in the continuation of the process, therefore the opening should remain fully opened.

The safety valve according to the invention comprises at least the following components:
- a housing,
- a valve element removably connected to the housing,
- at least one seal installed between the housing and the valve element, and
- at least one spring element, which ensures a force between the housing and the valve element in normal operation, and which enables ejection of the valve element in case of emergency degassing.

The spring element is installed between the housing and the frame of the valve element and is shaped as a symmetric or asymmetric leaf spring, which presses onto the housing on the surface facing towards the battery housing interior as well as onto the valve element on a surface facing the battery housing exterior. Preferably, the said spring element is symmetrically shaped, wherein from its middle part two legs project in opposite direction, each of said legs ending with ends that are approximately perpendicularly bent with regards to longer parts of both legs. One leg of the spring would also be sufficient for operation, only suitable geometry of leading and spring mounting is necessary for suitably connect the leg with elements of the housing or the valve element, respectively. The middle part may be equipped with attachment or positioning elements, which prevent movement of the spring left or right, respectively. These elements may be a pair of protrusions, two pairs of protrusions, holes or two holes or bent ears or any other element, which allows the same function. The spring element may be made from metal, preferably from stainless steel. It could also be made from a different suitable material or a composite structure from different materials. The material has to exhibit high resistance to environmental conditions, while it is also beneficial if it can be mass produced.

The spring element has two positions - the basic position in normal operation and a final position in case of an increased pressure in the battery or the housing where batteries are installed. In the basic position the spring is placed so that it has a sliding connection at least with the housing or the valve element or a part thereof. This connection is directed so that the spring allows compression of the seal between the housing and the valve element or its opening in the frame. Said sliding connection in usual (normal) conditions of operation ensures connection between the housing and the valve unit. In case the pressure increases, forces that act on the spring element increase as well, thus deforming the spring element, wherein increasing deformation causes the spring to slide from the supporting element and becomes unlocked from the support, which results in a loss of at least one sliding connection between at least one surface of the spring element and at least one remaining element of the valve element leading to ejection of the valve element. The shape and the mounting of the valve element thus allows that in case of emergency degassing the spring element loses physical contact with the valve element and/or the housing, which solves the problem of battery housing degassing. For function of the invention at least one sliding contact is needed, however, more sliding connections may be provided.

According to a possible embodiment more spring elements according to the above description may be used, said spring elements being installed on several places between the housing and the valve element or its frame. By use of two or more spring elements the contacts, in which forces for sliding contacts act, may be transferred from the central part of the hole in the valve frame towards the sealing edge between the valve element and the valve housing, thereby decreasing the need for increased rigidity of the housing and/or the valve element. This allows saving in the used material and/or in the height of the valve frame and/or the valve housing.

The housing of the valve may be shaped as a low rectangular solid having a central opening, which is at its edge provided with a concluded seat for the sealing element between the housing and the valve element. From the concluded shape around the opening grid forming console connections or crossbars are provided. The membrane may be any suitable filter, which is impermeable to water, but permeable for air. On the edges of the opening it is fused with the frame of the valve element or it can be pressed to the frame of the valve element with an additional element. The membrane may be installed between the valve frame and the lid or on the valve frame adjacent to the valve element, which may be ejected with the help of the spring element. The lid of the valve element is shaped as a plate, which delimits the environment and the space above the membrane, but does not seal the space above the membrane from the environment. The seal may be at least one or more, any suitable seal may be used. The seal is made from a material having lower rigidity as the housing. The seal is installed between the valve housing and the frame of the valve element and may be produced as a single independent component or it may be produced with a technology of sequential injection moulding of several components. In the latter case the seal is a soft component on the basic frame or a soft component on the element, which fulfils the function of the frame of the valve element. The seal may be either glued or injected on the housing or the valve frame using 2K injection moulding technology. Although one seal is sufficient, more consecutive seals in a sandwich formation may be used.

The valve element, which is removably connected with the valve housing 3, may comprise several parts and preferably comprises a frame 5 of the valve element. The frame 5 of the valve element may be provided with a through-hole in its central part. The valve element may further comprise a lid 7 for protection against environmental conditions, which forms a closed space with the frame 5 of the valve element, said closed space not being sealed against the environment nor against the central hole in the frame 5 of the valve element, wherein the central hole in the frame 5 of the valve element is closed against water ingress with an air permeable membrane 6.

The safety valve may have other optional components selected in the group comprising the components such as:
- an additional seal between the valve housing and the battery housing, which may be made as individual component or it can be produced with a technology of sequential injection moulding of several components, hence said additional seal may be a soft component of the valve housing,
- reinforcement threaded bushings for mounting of the battery housing,
- an additional element for locking the spring to the housing,
- geometry for installation of test adapter and/or assembly attachments, which on the outer side of the valve housing form an accessible surface facing towards the battery housing interior,
- a connecting element between the valve element and the housing, which after degassing restrains the ejected valve element close to the housing,
- a second connecting element or several different second connecting element for assembly of the valve housing in case the latter is made from several parts,
- metal reinforcement elements for ensuring rigid nature of the housing,
- metal reinforcement elements for ensuring rigid nature of the valve element,
- an attachment system for allowing opening of battery housing so that the valve housing is removed or retracted from the opening in the battery housing,
- a bolt or a screw or a knob with a seal for setting of the spring and valve frame sliding surface overlap, which by its angular or axial movement in the direction of its own axis causes the movement of the sliding support of the spring,
- a bolt or a screw or a knob with a seal with the function of locking and unlocking of the connection between spring and valve frame, and consequently manual removal and assembly of the valve element for allowing inspection and/or servicing in the battery housing,
- a window from a transparent material for allowing view into the battery housing,
- a second window from an optically conductive material for allowing transmission of optical digital signal between the interior and the exterior of battery housing,
- a sensor for sensing presence of the valve element,
- different sensors of physical properties, such as pressure sensor, temperature sensor, moisture sensor, acceleration sensor, chemical contamination sensor, hard particle contamination sensor, with which physical parameters in the proximity of the valve unit are measured and controlled via a computer,
- a camera,
- a connector,
- a motorized mechanism for setting of the spring to valve frame sliding surface overlap, and consequently motorized unlocking of the valve element,
- a communication unit for setting of the motorized mechanism for setting of the spring to valve frame sliding surface overlap for the possibility to remove the valve unit during servicing or checking of the battery housing interior,
- a communication screen with keys or a touch screen for communication with a computer unit inside the battery housing,
- a device for giving a sound signal,
- a second communication device with a possibility of automatic detection of emergency degassing and automatic reporting of events to a third communication device,
- openings for receiving electric and/or optic cables
   or any combination thereof.

The safety valve according to the invention is installed on the housing of batteries for use in vehicles in known manners. The invention is suitable for all batteries and accumulators of electric and hybrid vehicles.

The safety valve for a battery or an accumulator for electric or hybrid vehicles will be described in further detail based on exemplary embodiments and figures, which show:
- Figure 1: The safety valve in assembled state
- Figure 2: Explosion view of the safety valve elements
- Figure 3: Explosion view of the main four units of the safety valve
- Figure 4: Sectional view of the assembled safety valve with marked position of the spring element
- Figure 5: Schematic view of forces and reactions inside the safety valve
- Figure 6: The spring element shown in floor plan, elevation view and isometrical view
- Figure 7: Embodiment I of the spring element - hinge with a spring
- Figure 8: Embodiment I of the spring element - hinge with a rubber spring
- Figure 9: Embodiment I of the spring element - hinge with two magnets
- Figure 10: Embodiment I of the spring element - hinge with a magnet and tinplate
- Figure 11: Embodiment I of the spring element - bending loaded coil spring

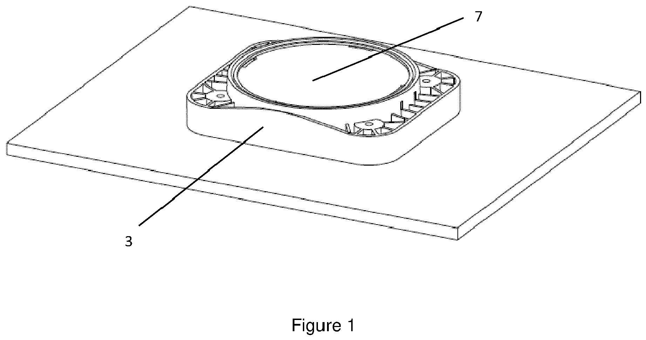

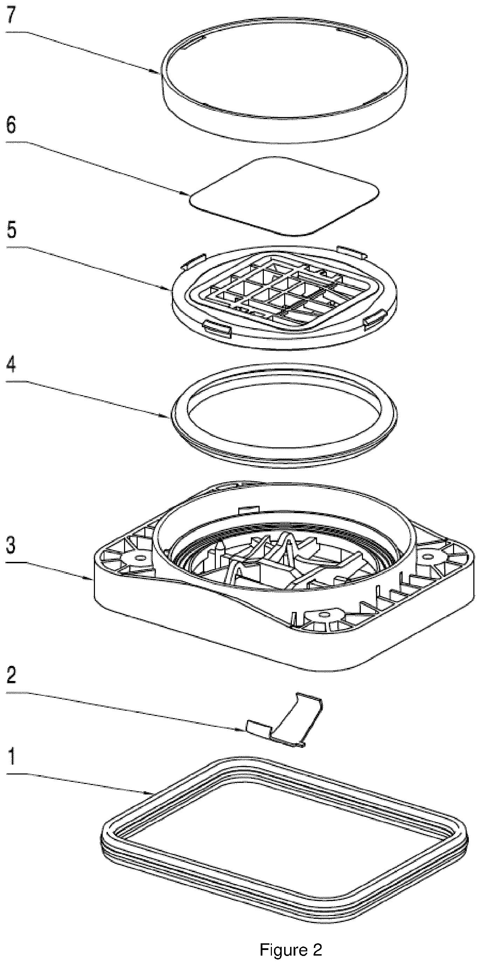

The safety valve according to the embodiment shown in figures 1 to 3 comprises the following components:
- housing 3,
- a valve element removably connected to the housing 3, said valve element comprising a valve frame 5 and a lid 7, between which a liquid impermeable and air permeable membrane 6 is installed,
- a seal 4 installed between the housing 3 and the valve element, and
- a spring element 2, which ensures a force between the housing 3 and the valve element in normal operation, and which enables ejection of the valve element in case of emergency degassing.

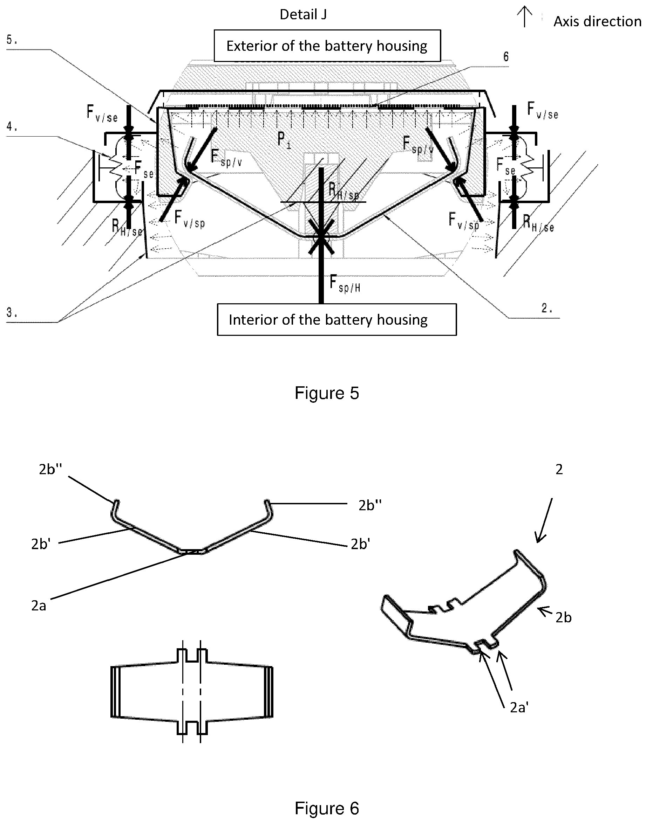

The spring element 2 is installed between the housing 3 and the frame 5 of the valve element, and is shaped as a leaf spring as shown in figure 6. Said spring 2 is symmetrically shaped, namely, from the central part 2a two pairs of protrusions 2a' continue in opposite directions into two legs 2b, of which short parts on far ends 2b" are bent at approximately right angle towards long parts 2b'.

The valve element may have a covering (lid) 7 for protection against environmental conditions, said covering forming a closed space with the frame 5 of the valve element, which is not sealed against the exterior nor towards the central opening in the frame 5 of the valve element. The central part in the frame 5 of the valve element may be closed against water ingress with an air permeable membrane 6.

The valve unit (assembly of elements 5, 6, 7) is connected to the housing 3 with at least one pre-tensed leaf-shaped spring element 2, preferably made from metal/stainless steel, which ensures an assembly force between the housing 3 and the valve unit. The spring element 2 translates the needed force for compression of the seal 4 directly from the housing 3 to the frame 5 of the valve element so that it lays on at least one (straight or inclined) towards the battery housing exterior directed locking surface of the frame 5 of the valve element.

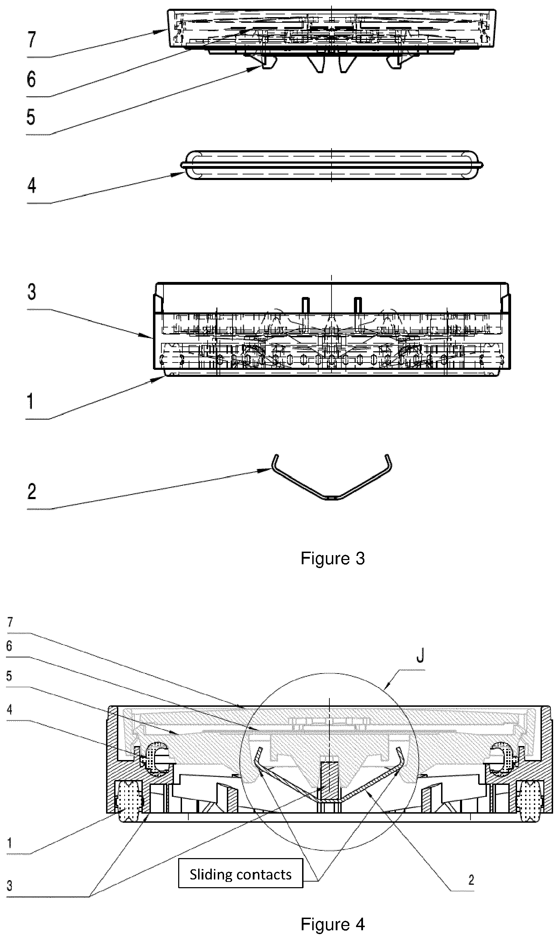

Figure 4 shows a view of the safety valve with marked basic position of the spring element, wherein the physical sliding contact between the spring element 2 and the frame 5 of the valve element is visible. The spring element 2 is supported with housing 3 geometry, which limits movement of the spring element 2 in the direction of the axis towards the battery housing exterior as shown in figure 4.

The process of emergency degassing is an event when the pressure Pᵢ inside the housing 3 increases to a pre-defined and spring dimension-defined value for triggering of the mechanism for emergency degassing as shown in figure 5. Thus the effect of pressure on the inner surfaces of the valve element (assembly of components marked with reference numbers 5, 6 and 7) causes an increase of forces F_{v/sp} and R_{H/sp}, which act on the spring element 2, and consequently cause a bending deformation of the spring element 2 and relative movement of the valve unit with regards to the housing 3 in the axis direction towards the exterior of the battery housing (direction of axis and the exterior of the battery housing is shown in figure 5). When due to the bending deformation of the spring element 2 individual leg 2b' of the spring element 2 is sufficiently removed from the locking geometry on the frame 5 of the valve element, loss of at least one sliding contact between the spring element 2 and the frame 5 of the valve element occurs. This is followed with a loss of the remaining sliding contact between the spring element 2 and the frame 5 of the valve element, so that the assembly (connecting) force between the valve element components 5, 6, 7 and the housing 3 ensured by the spring element 2 is lost, as it no longer has attachment to the frame 5 of the valve element.

The spring element 2 due to its shape and mounting enables that in case of emergency degassing at least one of the parts in contact with the spring element 2 loses the sliding contact (loss of at least one pair of the counteracting locking forces F_{sp/v} and F_{v/sp} shown in figure 5) between the spring element and a surface, which consequently results in full loss of joining forces (F_{sp/v} ,F_{v/sp}, R_{H/sp}, F_{sp/H} shown in figure 5) between the valve element and the valve housing 3. This allows ejection of the valve element due to the pressure inside the battery housing, thus completing the process of triggering of the emergency degassing. The triggering pressure Pᵢ inside the battery housing can consequently cause ejection of the valve unit 5, 6, 7 from the hole in housing 3.

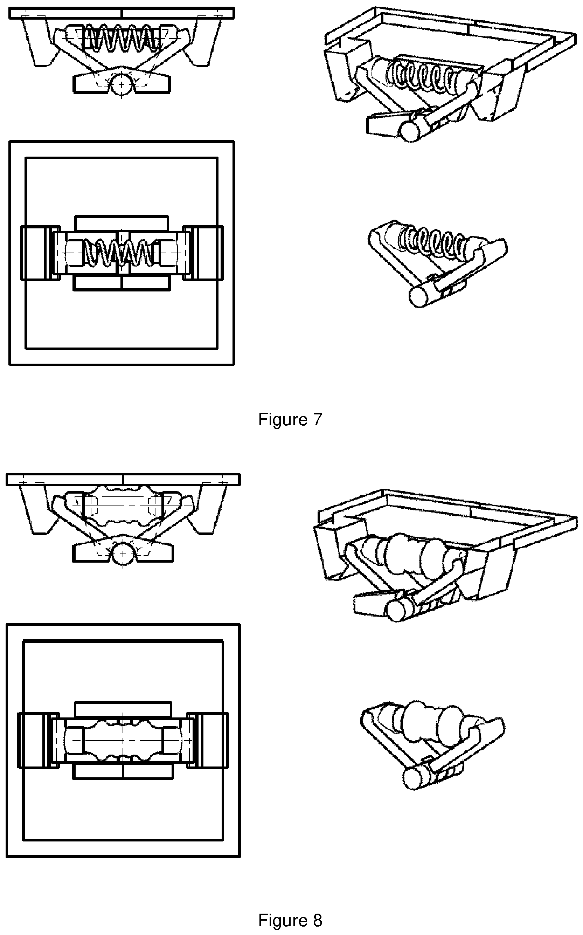

Figures 7, 8, 9, 10 and 11 show alternative embodiments of the spring element, namely figures 7, 8, 9 and 10 as a hinge with a spring, rubber spring, two oppositely oriented magnets or a magnet and a tinplate, wherein the spring or the force between the magnets or the magnet and the tinplate holds both legs of the hinge in the required position, said hinge legs being in the same sliding contacts as the spring element according to figure 6 and show the same shape deformation upon pressure change.

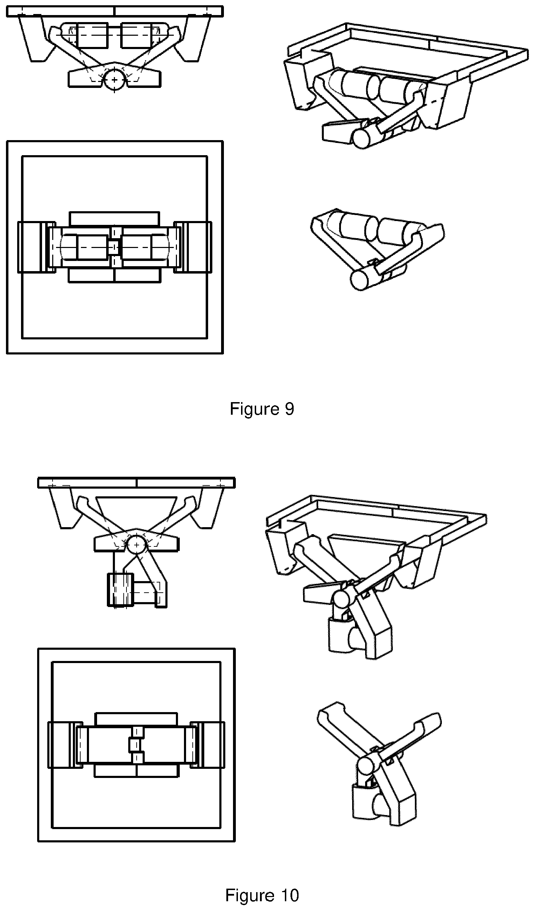

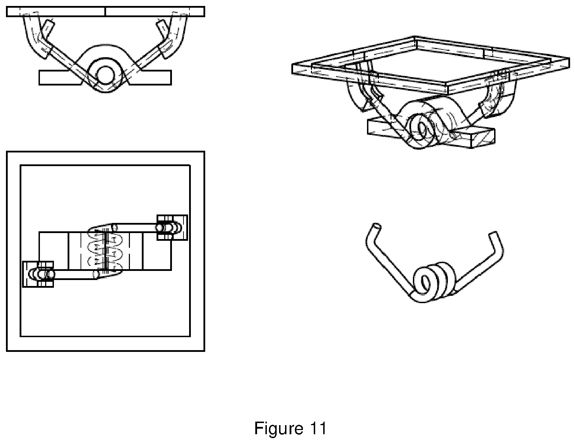

The hinge is near its rotation axis mounted on the housing 3, which prevents movement of the assembled spring element towards the exterior of the battery housing. Figure 11 shows a coil spring mounted in a bent manner, said spring also having two legs, which ensure a connecting (assembly) force between the valve frame 3 and the valve unit. The mounted coil spring has a physical sliding contact with the frame 5 of the valve element and is supported with the geometry of the housing 3, which delimits its movement in the axis towards the exterior of the battery housing as is also shown in figure 4 for the embodiment of the spring element according to figure 6. Figures 7, 8, 9, 10 and 11 show alternative embodiments of the spring element, wherein the left side of figures represent possible contact geometric elements of the housing and the valve frame, while the right side of the figures 7, 8, 9, 10 and 11 shows an isometric view of individual alternative embodiments with marked possible contact geometry elements (above) and individual assembly of the spring element in figures 7 and 8 (below), assembly of the spring element with two oppositely oriented magnets in figure 9, the assembly of spring element with a scissor transmission of forces with the magnet and the tin plate in figure 10, and individual spring element in figure 11.

## Claims

1. The safety valve for a battery or an accumulator for an electric or a hybrid vehicle, said safety valve comprising at least the following components:
- a housing,
- a valve element removably connected with the housing,
- at least one seal installed between the housing and the valve element, and
- at least one spring element (2) installed between the housing (3) and the valve frame (5), said spring element (2) being arranged to ensure a force between the housing and the valve element in normal operation, and is arranged to trigger ejection of the valve element in case of emergency degassing when the pressure to interior surfaces of the valve element cause an increase of forces (F_{v/sp} and R_{H/sp}), which act on the spring element (2), thereby causing deformation of the spring element (2) and relative movement of the valve element with regards to the housing (3) in the direction towards the battery housing exterior, wherein at least one leg of the spring element (2) slides from at least one contact surface.

2. The safety valve for a battery or an accumulator for an electric or a hybrid vehicle according to claim 1, **characterized in that** the spring element (2) is shaped as a leaf spring, which presses onto the housing on a surface facing towards the battery housing interior, and onto the valve element on a surface facing towards the battery housing exterior.

3. The safety valve for a battery or an accumulator for an electric or a hybrid vehicle according to claim 1 or 2, **characterized in that** the spring is symmetrically shaped, wherein from a middle part (2a) with a geometry for a transverse lock (2a') continues in opposite directions with at least one, preferably two legs (2b), which end with a shorter end (2b"), which are bent with regards to a longer part (2b') of the legs.

4. The safety valve for a battery or an accumulator for an electric or a hybrid vehicle according to claim 1, **characterized in that** the spring element is a hinge with a spring, a hinge with a rubber spring, a hinge with two magnets, a hinge with one magnet and a ferromagnetic tinplate or a bending loaded coil spring.

5. The safety valve for a battery or an accumulator for an electric or a hybrid vehicle according to any of the preceding claims, **characterized in that** the spring element (2) is made from metal, preferably from stainless steel, or any other suitable material or composite structure of several different materials.

6. The safety valve for a battery or an accumulator for an electric or a hybrid vehicle according to any of the preceding claims, **characterized in that** one or more spring elements (2) may be used.

7. The safety valve for a battery or an accumulator for an electric or a hybrid vehicle according to any of the preceding claims, **characterized in that** the valve element has the frame (5) of the valve element with a through-hole in the central part, and a lid (7) for protection against environmental conditions, which forms a closed space with the frame (5) of the valve element, which is not sealed against the environment nor towards the central hole in the frame (5) of the valve element, wherein the central hole in the frame (5) of the valve element is closed against water ingress with an air permeable membrane (6).

8. The safety valve for a battery or an accumulator for an electric or a hybrid vehicle according to any of the preceding claims, **characterized in that** the safety valve has other, optional components selected in the group consisting of:
- an additional seal between the valve housing and the battery housing, which may be made as individual component or it can be produced with a technology of sequential injection moulding of several components, hence said additional seal may be a soft component of the valve housing,
- reinforcement threaded bushings for mounting of the battery housing,
- an additional element for locking the spring to the housing,
- geometry for installation of test adapter and/or assembly attachments, which on the outer side of the valve housing form an accessible surface facing towards the battery housing interior,
- a connecting element between the valve element and the housing, which after degassing restrains the ejected valve element close to the housing,
- a second connecting element or several different second connecting elements for assembly of the valve housing in case the latter is made from several parts,
- metal reinforcement elements for ensuring rigid nature of the housing,
- metal reinforcement elements for ensuring rigid nature of the valve element,
- an attachment system for allowing opening of battery housing so that the valve housing is removed or retracted from the opening in the battery housing,
- a first bolt or a screw or a knob with a seal for setting of the spring and valve frame sliding surface overlap, which by its angular or axial movement in the direction of its own axis causes the movement of the sliding support of the spring,
- a second bolt or a screw or a knob with a seal with the function of locking and unlocking of the connection between spring and valve frame, and consequently manual removal and assembly of the valve element for allowing inspection and/or servicing in the battery housing,
- a window from a transparent material for allowing view into the battery housing,
- a second window from an optically conductive material for allowing transmission of optical digital signal between the interior and the exterior of battery housing,
- a sensor for sensing presence of the valve element,
- different sensors of physical properties, such as pressure sensor, temperature sensor, moisture sensor, acceleration sensor, chemical contamination sensor, hard particle contamination sensor, with which physical parameters in the proximity of the valve unit are measured and controlled via a computer,
- a camera,
- a connector,
- a motorized mechanism for setting of the spring to valve frame sliding surface overlap, and consequently motorized unlocking of the valve element,
- a communication unit for setting the motorized mechanism for setting of the spring to valve frame sliding surface overlap for the possibility to remove the valve unit during servicing or checking of the battery housing interior,
- a communication screen with keys or a touch screen for communication with a computer unit inside the battery housing,
- a device for giving a sound signal,
- a second communication device with a possibility of automatic detection of emergency degassing and automatic reporting of events to a third communication device,
- openings for receiving electric and/or optic cables,
or any combination thereof.

9. The safety valve for a battery or an accumulator for an electric or a hybrid vehicle according to any of the preceding claims, **characterized in that** in case of emergency degassing it is arranged to loose at least one sliding connection between at least one surface of the spring element and at least one remaining element of the assembly, wherein said sliding connection in normal operation ensures a connection between the housing and the valve unit; once the said loss of physical contact between the spring element and at least one other element occurs, the valve unit disengages from the housing, thus allowing degassing and ejection of the valve unit.

10. The safety valve for a battery or an accumulator for an electric or a hybrid vehicle according to any of the preceding claims, **characterized in that** it is installed onto the housing of vehicle battery in any known manner.

11. A battery or an accumulator for an electric or a hybrid vehicle with the safety valve according to any of the preceding claims.

12. An electric or a hybrid vehicle with the battery according to the preceding claim.
